# EUROPEAN PATENT SPECIFICATION

(11) **EP 3 659 875 B1**
(45) Date of publication and mention of the grant of the patent: **24.01.2024**
(21) Application number: 19195562.4
(22) Date of filing: 05.09.2019
(51) Int. Cl.: B60R 25/24, B60R 25/25, G06Q 30/06, G06Q 50/30

(54) **METHOD AND APPARATUS FOR CONTROLLING VEHICLE**
VERFAHREN UND VORRICHTUNG ZUR STEUERUNG EINES FAHRZEUGS
PROCÉDÉ ET APPAREIL DE COMMANDE DE VÉHICULE

(30) Priority: 30.11.2018 CN 201811459936
(43) Date of publication of application: 03.06.2020
(73) Proprietor: Baidu Online Network Technology (Beijing) Co., Ltd., Beijing 100085 (CN)
(72) Inventor: Zhu, Xiangxiang, Beijing, 100085 (CN)
(74) Representative: Patentanwälte Ruff, Wilhelm, Beier, Dauster & Partner mbB

(56) References cited:
- WO-A1-2005/021340
- US-A1- 2002 097 145
- US-A1- 2002 152 010
- US-A1- 2014 129 301
- US-A1- 2018 072 270
- US-A1- 2018 134 254

## Description

### TECHNICAL FIELD

Embodiments of the present disclosure relate to the field of vehicle control technology, specifically to a method and apparatus for controlling a vehicle.

### BACKGROUND

With the development of science and technology, vehicle sharing, as a new travelling mode, appears in people's lives. In the existing vehicle sharing scheme, a user needs to download a corresponding client and register. When using a shared vehicle, the user needs to login the client, and input the license plate number of the shared vehicle to be used to acquire an unlocking code, or unlock by directly scanning an identification code on the shared vehicle to be used. This vehicle unlocking method is quite cumbersome.

An example of vehicle sharing is described in US2018/134254, whereby the distance between a user and the vehicle is determined and a face image of the user is acquired to authenticate a user and unlock the vehicle.

### SUMMARY

Embodiments of the present disclosure propose a method and apparatus for controlling a vehicle.

In a first aspect, the embodiments of the present disclosure provide a method for controlling a vehicle according to claim 1.

In some embodiments, the sending an unlocking instruction to the vehicle, in response to determining that the user information satisfies a preset condition, includes: sending prompt information for unlocking the vehicle in response to determining that the user information satisfies the preset condition; and sending the unlocking instruction to the vehicle, in response to determining that response operation information for the prompt information is received.

In some embodiments, the method further includes: recording an unlocking time, in response to determining that the vehicle is unlocked; recording a locking time, in response to determining that the vehicle is locked; and generating a vehicle usage fee value based on the unlocking time and the locking time.

In some embodiments, the determining user information of the user based on the face image, includes: extracting feature information of the face image; matching the extracted feature information with feature information in a preset feature information set, where the feature information in the feature information set is in one-to-one correspondence with user information in a preset user information set; and determining user information corresponding to feature information matching the extracted feature information as the determined user information.

In some embodiments, the user information in the user information set is obtained by the following steps: receiving an image for registration of the user; extracting, in response to determining that the image for registration includes a face image, feature information of the face image in the image for registration and receiving registration information of the user; and using the registration information as user information corresponding to the feature information of the face image in the image for registration.

In some embodiments, the method further includes: outputting prompt information in response to determining that the image for registration does not include a face image.

In a second aspect, the embodiments of the present disclosure provide an apparatus for controlling a vehicle according to claim 7.

In some embodiments, the unlocking instruction sending unit is further configured to: send prompt information for unlocking the vehicle in response to determining that the user information satisfies the preset condition; and send the unlocking instruction to the vehicle, in response to determining that response operation information for the prompt information is received.

In some embodiments, the apparatus further includes: an unlocking time recording unit, configured to record an unlocking time, in response to determining that the vehicle is unlocked; a locking time recording unit, configured to record a locking time, in response to determining that the vehicle is locked; and a value generation unit, configured to generate a vehicle usage fee value based on the unlocking time and the locking time.

In some embodiments, the user information determining unit includes: a feature information extraction module, configured to extract feature information of the face image; a feature information matching module, configured to match the extracted feature information with feature information in a preset feature information set, where the feature information in the feature information set is in one-to-one correspondence with user information in a preset user information set; and a user information determining module, configured to determine user information corresponding to feature information matching the extracted feature information as the determined user information.

In some embodiments, the apparatus further includes a user information generation unit configured to generate the user information in the user information set, the user information generation unit is configured to: receive an image for registration of the user; extract, in response to determining that the image for registration includes a face image, feature information of the face image in the image for registration and receive registration information of the user; and use the registration information as user information corresponding to the feature information of the face image in the image for registration.

In some embodiments, the user information generation unit is further configured to: output prompt information in response to determining that the image for registration does not include a face image.

In a third aspect, the embodiments of the present disclosure provide a computer readable medium, storing a computer program thereon, the program, when executed by a processor, implements the method according to any one of the embodiments in the first aspect.

According to the method and apparatus for controlling a vehicle provided by the above embodiments of the present disclosure, first a distance between a user and the vehicle is determined, a face image of the user is acquired in response to determining that the distance is smaller than or equal to a preset threshold, then user information of the user is determined based on the face image, and an unlocking instruction is sent to the vehicle, in response to determining that the user information satisfies a preset condition. According to the method and apparatus of the present embodiment, a vehicle may be unlocked using face recognition technology, which do not require additional operations by the user, simplifying the unlocking steps of a shared vehicle.

### BRIEF DESCRIPTION OF THE DRAWINGS

After reading detailed descriptions of nonlimiting embodiments with reference to the following accompanying drawings, other features, objectives and advantages of the present disclosure will become more apparent:
Fig. 1 is a diagram of an exemplary system architecture in which an embodiment of the present disclosure may be implemented;
Fig. 2 is a flowchart of an embodiment of a method for controlling a vehicle according to the present disclosure;
Fig. 3 is a schematic diagram of an application scenario of the method for controlling a vehicle according to the present disclosure;
Fig. 4 is a flowchart of another embodiment of the method for controlling a vehicle according to the present disclosure;
Fig. 5 is a schematic structural diagram of an embodiment of an apparatus for controlling a vehicle according to the present disclosure; and
Fig. 6 is a schematic structural diagram of a computer system adapted to implement a device of the embodiments of the present disclosure.

### DETAILED DESCRIPTION OF EMBODIMENTS

The present disclosure will be further described below in detail in combination with the accompanying drawings and the embodiments. It may be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

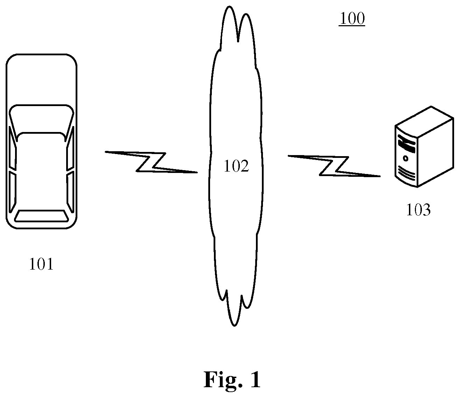

Fig. 1 illustrates an exemplary system architecture 100 of an embodiment of a method for controlling a vehicle or an apparatus for controlling a vehicle in which the present disclosure may be implemented.

As shown in Fig. 1, the system architecture 100 may include a vehicle 101, a network 102, and a server 103. The network 102 is used to provide a communication link medium between the vehicle 101 and the server 103. The network 102 may include various types of connections, such as wired, wireless communication links, or optic fibers.

The vehicle 101 interacts with the server 103 through the network 102 to receive or transmit signals or the like. Various electronic apparatuses, such as a vehicle controller, a sensor, an image acquisition apparatus, may be mounted on the vehicle 101.

The vehicle 101 may be a variety of vehicles including, but is not limited to, a large passenger bus, a tractor, a city bus, a medium passenger bus, a large truck, a small car, a small automatic car, an autonomous vehicle, or other smart vehicles.

The server 103 may be a server that provides various services, such as a backend server that parses a face image transmitted by the vehicle 101. The backend server may process the received face image or the like, and feed back a processing result (for example, an unlocking instruction) to the vehicle 101.

It should be noted that the server may be hardware or software. When being hardware, the server may be implemented as a distributed server cluster composed of a plurality of servers, or as a single server. When being software, the server may be implemented as a plurality of software or software modules (for example, for providing distributed services) or as a single software or software module, which is not specifically limited herein.

It should be noted that the steps included in the method for controlling a vehicle provided by the embodiments of the present disclosure may all be performed by a vehicle-mounted computer of the vehicle 101, or may be all performed by the server 103. Alternatively, some of the steps are performed by the vehicle-mounted computer of the vehicle 101, and the other steps are performed by the server 103. Correspondingly, the units or modules included in the apparatus for controlling a vehicle may be all disposed in the vehicle-mounted computer of the vehicle 101, or may be all disposed in the server 103, or some units or modules may be disposed in the vehicle-mounted computer of the vehicle 101, and the other units or modules are disposed in the server 103. When the method for controlling a vehicle is performed by the vehicle-mounted computer of the vehicle 101, the system architecture 100 may not include the network 102 and the server 103.

It should be understood that the number of vehicles, networks and servers in Fig. 1 is merely illustrative. Depending on the implementation needs, there may be any number of vehicles, networks and servers.

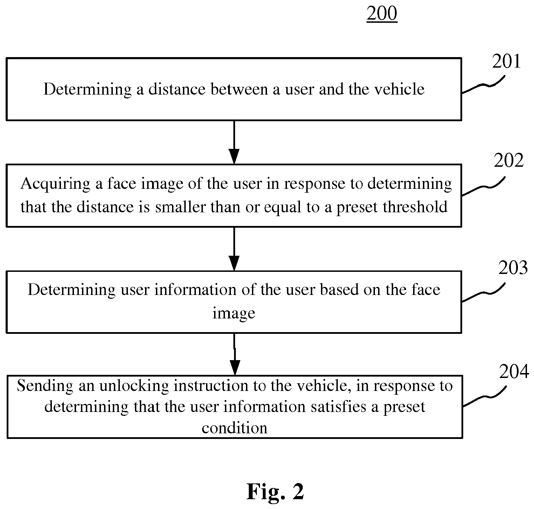

With further reference to Fig. 2, a flow 200 of an embodiment of a method for controlling a vehicle according to the present disclosure is illustrated. The method for controlling a vehicle of the present embodiment includes the following steps 201 to 204.

Step 201 includes determining a distance between a user and the vehicle.

In the present embodiment, an executing body of the method for controlling a vehicle (for example, the vehicle-mounted computer of the vehicle 101 or the server 103 shown in Fig. 1) may determine the distance between the user and the vehicle by using information acquired by a sensor or image acquisition apparatus mounted on the vehicle. The sensor may be a laser radar sensor, a millimeter wave radar sensor, an infrared sensor, etc., which may measure the distance between the user and the vehicle. The image acquisition apparatus may be a binocular camera or the like, and the distance between the user and the vehicle is calculated by an image recognition algorithm by acquiring an image of the user.

When the executing body of the present embodiment is the server, the sensor or image acquisition apparatus mounted on the vehicle may transmit the acquired information to the executing body through a wired or a wireless connection. The wireless connection may include, but is not limited to, 3G/4G connection, WiFi connection, Bluetooth connection, WiMAX connection, Zigbee connection, UWB (ultra wideband) connection, or other wireless connection now known or to-be-developed in the future.

When the executing body of the present embodiment is the vehicle-mounted computer of the vehicle, the sensor or image acquisition apparatus mounted on the vehicle may transmit the acquired information to the executing body via a car bus.

Step 202 includes acquiring a face image of the user in response to determining that the distance is smaller than or equal to a preset threshold.

When the executing body determines that the distance between the user and the vehicle is smaller than or equal to the preset threshold, the face image of the user may be acquired. The executing body may control the image acquisition apparatus to acquire the face image of the user by sending an image acquisition instruction to the image acquisition apparatus in communication connection with the executing body. Alternatively, when the executing body is the server, a control instruction may be first sent to the vehicle, so that the vehicle controls the image acquisition apparatus mounted thereon to acquire the face image of the user.

In some implementations, to facilitate the user to use the vehicle, the image acquisition apparatus may be mounted at the door of the driver's seat of the vehicle.

Step 203 includes determining user information of the user based on the face image.

After acquiring the face image of the user, the user information of the user may be determined based on the face image. Specifically, the executing body may perform face recognition on the face in the face image, determine the identity of the user, and further determine the user information of the user. The user information may include a credit value of the user, credit card information of the user, driving license information of the user, or the like. The credit value is obtained by analysing of the income, expenditure, and historical behavior data on shopping websites of the user by a bank or other third-party institutions. The credit card information may include a credit card number, a credit card expenditure amount, or the like. The driving license information may include the application time of the driving license, the licensed driving model, or the like.

In some alternative implementations of the present embodiment, the executing body may determine the user information of the user by the following steps not shown in Fig. 2: first, extracting feature information of the face image, then matching the extracted feature information with feature information in a preset feature information set, where the feature information in the feature information set is in one-to-one correspondence with user information in a preset user information set, and finally determining user information corresponding to feature information matching the extracted feature information as the determined user information.

In the present implementation, the executing body may first extract the feature information of the face image. The extracted feature information is then compared with each piece of feature information in the preset feature information set. When the extracted feature information and a certain piece of feature information in the feature information set are all identical or partially identical, it is determined that the extracted feature information matches the piece of feature information. Then, the executing body may determine the user information corresponding to the feature information matching the extracted feature information in the feature information set as the determined user information. Each piece of feature information in the feature information set is in one-to-one correspondence with each piece of user information in the preset user information set.

Step 204 includes sending an unlocking instruction to the vehicle, in response to determining that the user information satisfies a preset condition.

After the executing body determines that the user information satisfies the preset condition, the unlocking instruction may be sent to the vehicle to control unlocking the vehicle. For example, when the user information includes the credit card number of the user, the executing body sends the unlocking instruction to the vehicle when it is determined that the credit card information of the user includes more than two credit card numbers.

In some alternative implementations of the present embodiment, the user information includes a credit value. The step 204 may be implemented by the following step not shown in Fig. 2: sending the unlocking instruction to the vehicle, in response to determining that the credit value is greater than a preset credit value threshold.

When the executing body determines that the credit value of the user is greater than the preset credit value threshold, the unlocking instruction may be sent to the vehicle to control the unlocking of the vehicle.

In some alternative implementations of the present embodiment, the step 204 may further include the following steps not shown in Fig. 2: sending prompt information for unlocking the vehicle in response to determining that the user information satisfies the preset condition; and sending the unlocking instruction to the vehicle, in response to determining that response operation information for the prompt information is received.

In the present implementation, after determining that the user information satisfies the preset condition, the executing body may send the prompt information for unlocking the vehicle. The prompt information is used to remind the user to further operate the vehicle to confirm that the user needs to use the shared vehicle. The prompt information may be voice information, lighting information, or the like. When the executing body determines that the response operation information of the user for the prompt information is received, and confirms that the user needs to use the shared vehicle, the unlocking instruction may be sent to the vehicle. The response operation information may be information matching the sent prompt information. For example, the prompt information may be the voice "Please blink at the camera". When the executing body determines that an image sequence or video of the user blinking sent by the camera is received, the unlocking instruction may be sent to the vehicle. The image sequence or video of the user blinking is the response operation information. With the implementation of the method, whether the user needs to use the shared vehicle may be further confirmed, avoiding the false unlocking of the shared vehicle.

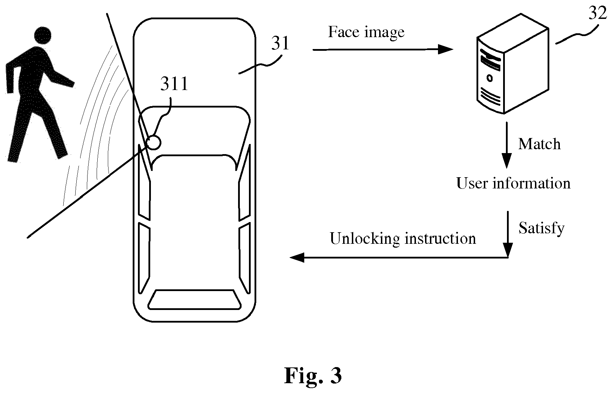

With further reference to Fig. 3, Fig. 3 is a schematic diagram of an application scenario of the method for controlling a vehicle according to the present embodiment. In the application scenario of Fig. 3, when the user approaches a shared vehicle 31, a camera 311 mounted on the shared vehicle 31 captures a face image of the user. The face image is then sent to a server 32. The server 32 may perform face recognition on the face image, and determines that the user information of the user includes two credit card numbers. Then, the server 32 determines that the user information satisfies a preset condition, and sends an unlocking instruction to the shared vehicle 31. The shared vehicle 31 is automatically unlocked upon receiving the unlocking instruction. After unlocking, the user may use the shared vehicle 31.

According to the method for controlling a vehicle provided by the above embodiment of the present disclosure, first a distance between a user and the vehicle is determined, a face image of the user is acquired in response to determining that the distance is smaller than or equal to a preset threshold, then user information of the user is determined based on the face image, and an unlocking instruction is sent to the vehicle, in response to determining that the user information satisfies a preset condition. According to the method of the present embodiment, a vehicle may be unlocked using face recognition technology, which do not require additional operations by the user, simplifying the unlocking steps of a shared vehicle.

In some alternative implementations of the present embodiment, the user information in the user information set may be obtained by the following steps not shown in Fig. 2: receiving an image for registration of the user; extracting, in response to determining that the image for registration includes a face image, feature information of the face image in the image for registration and receiving registration information of the user; and using the registration information as user information corresponding to the feature information of the face image in the image for registration.

In the present implementation, the user may register an account on a preset website for shared vehicle management. During registration, the user may first upload an image for registration. The executing body may receive the image for registration uploaded by the user, and the image for registration may include a face image of the user himself. After receiving the image for registration, the executing body may determine whether a face image is included in the image for registration. If the face image is included, the executing body may extract the feature information of the face image in the image for registration. Then, the executing body may further receive the registration information of the user. The registration information may include a username, credit card information, driving license information, or the like. The executing body may use the registration information of the user as the user information corresponding to the feature information of the face image in the image for registration.

In some alternative implementations of the present embodiment, the method may further include the following step not shown in Fig. 2: outputting prompt information in response to determining that the image for registration does not include the face image.

If the executing body determines that the face image is not included in the image for registration, the prompt information may be output. The prompt information is used to remind the user to upload an image including the face image of himself, otherwise the shared vehicle cannot be unlocked by face recognition.

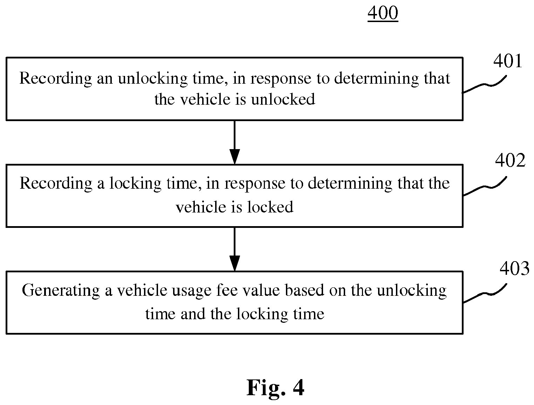

With further reference to Fig. 4, a flow 400 of another embodiment of the method for controlling a vehicle according to the present disclosure is illustrated. As shown in Fig. 4, the method for controlling a vehicle of the present embodiment may include the following steps: 401 to 403.

Step 401 includes recording an unlocking time, in response to determining that the vehicle is unlocked.

In the present embodiment, the executing body may record the unlocking time when the vehicle is unlocked. Specifically, the executing body may determine that the vehicle is unlocked when the unlocking instruction is sent, and therefore, the executing body may use the sending time of the unlocking instruction as the unlocking time of the vehicle.

Step 402 includes recording a locking time, in response to determining that the vehicle is locked.

In the present embodiment, when the user finishes using the vehicle, the user may lock the vehicle. The user may lock the vehicle in various methods, for example, turning off the vehicle, or closing the door. It may be understood that the user may send a locking instruction to the vehicle when performing the locking operation. The executing body may use the sending timing of the locking instruction as the locking time of the vehicle.

Step 403 includes generating a vehicle usage fee value based on the unlocking time and the locking time.

The executing body may first calculate vehicle usage time after recording the unlocking time and the locking time of the vehicle. Then, the vehicle usage fee value is generated based on the vehicle usage time and a preset fee calculation rule. For example, the executing body may calculate the vehicle usage fee value based on the vehicle usage fee per unit time and the vehicle usage time.

After obtaining the vehicle usage fee value, the executing body may send the vehicle usage fee value to the registered account of the user on a shared vehicle management website. The user may login the account on a terminal to determine the fee of this usage of the shared vehicle. Alternatively, the executing body may further send the vehicle usage fee value to the server of the corresponding bank according to the credit card number of the user, so that the server deducts the corresponding fee from the corresponding credit card.

According to the method for controlling a vehicle provided by the above embodiment of the present disclosure, a vehicle usage fee value may be generated based on the user usage time of the vehicle to implement management of the vehicle.

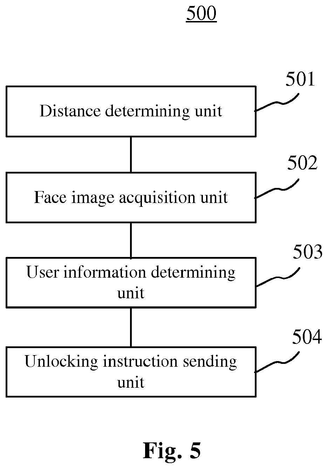

With further reference to Fig. 5, as an implementation of the method shown in the above figures, the present disclosure provides an embodiment of an apparatus for controlling a vehicle, and the apparatus embodiment corresponds to the method embodiment as shown in Fig. 2, and the apparatus may be specifically applied to various electronic devices.

As shown in Fig. 5, an apparatus 500 for controlling a vehicle of the present embodiment includes: a distance determining unit 501, a face image acquisition unit 502, a user information determining unit 503 and an unlocking instruction sending unit 504.

The distance determining unit 501 is configured to determine a distance between a user and the vehicle.

The face image acquisition unit 502 is configured to acquire a face image of the user in response to determining that the distance is smaller than or equal to a preset threshold.

The user information determining unit 503 is configured to determine user information of the user based on the face image.

The unlocking instruction sending unit 504 is configured to send an unlocking instruction to the vehicle, in response to determining that the user information satisfies a preset condition.

In some alternative implementations of the present embodiment, the user information includes a credit value. The unlocking instruction sending unit 504 may be further configured to: send the unlocking instruction to the vehicle, in response to determining that the credit value is greater than a preset credit value threshold.

In some alternative implementations of the present embodiment, the unlocking instruction sending unit 504 may be further configured to: send prompt information for unlocking the vehicle in response to determining that the user information satisfies the preset condition; and send the unlocking instruction to the vehicle, in response to determining that response operation information for the prompt information is received.

In some alternative implementations of the present embodiment, the apparatus 500 may further include an unlocking time recording unit, a locking time recording unit and a value generation unit not shown in Fig. 5.

The unlocking time recording unit is configured to record an unlocking time, in response to determining that the vehicle is unlocked.

The locking time recording unit is configured to record a locking time, in response to determining that the vehicle is locked.

The value generation unit is configured to generate a vehicle usage fee value based on the unlocking time and the locking time.

In some alternative implementations of the present embodiment, the user information determining unit 503 may further include a feature information extraction module, a feature information matching module and a user information determining module not shown in Fig. 5.

The feature information extraction module is configured to extract feature information of the face image.

The feature information matching module is configured to match the extracted feature information with feature information in a preset feature information set. The feature information in the feature information set is in one-to-one correspondence with user information in a preset user information set.

The user information determining module is configured to determine user information corresponding to feature information matching the extracted feature information as the determined user information.

In some alternative implementations of the present embodiment, the apparatus 500 may further include a user information generation unit not shown in Fig. 5, the user information generation unit is configured to: receive an image for registration of the user; extract, in response to determining that the image for registration includes a face image, feature information of the face image in the image for registration and receive registration information of the user; and use the registration information as user information corresponding to the feature information of the face image in the image for registration.

In some alternative implementations of the present embodiment, the user information generation unit is further configured to: output prompt information in response to determining that the image for registration does not include a face image.

The apparatus for controlling a vehicle provided by the above embodiment of the present disclosure first determines a distance between a user and the vehicle, acquires a face image of the user in response to determining that the distance is smaller than or equal to a preset threshold, then determines user information of the user based on the face image, and sends an unlocking instruction to the vehicle, in response to determining that the user information satisfies a preset condition. According the apparatus of the present embodiment, a vehicle may be unlocked using face recognition technology, which do not require additional operations by the user, simplifying the unlocking steps of a shared vehicle.

It should be understood that the units 501 to 504 described in the apparatus 500 for controlling a vehicle respectively correspond to the steps in the method described with reference to Fig. 2. Thus, the operations and features described above for the method for controlling a vehicle are equally applicable to the apparatus 500 and the units contained therein, and detailed description thereof will be omitted.

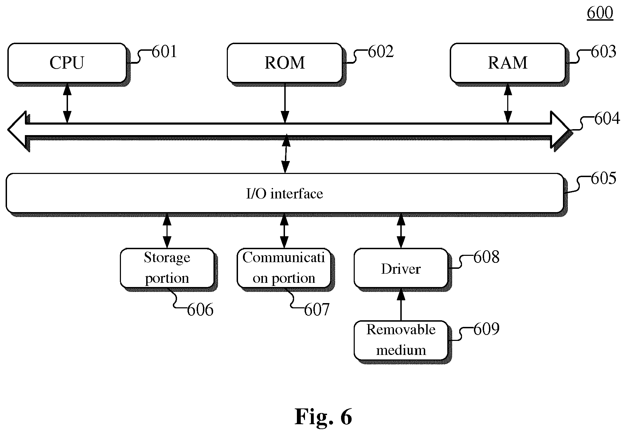

With further reference to Fig. 6, a schematic structural diagram of a computer system 600 adapted to implement a device of the embodiments of the present disclosure is shown. The device shown in Fig. 6 is merely an example, and should not impose any limitation on the function and scope of use of the embodiments of the present disclosure. The device shown in Fig. 6 may be installed in a vehicle or may be installed in a server.

As shown in Fig. 6, the computer system 600 includes a central processing unit (CPU) 601, which may execute various appropriate actions and processes in accordance with a program stored in a read-only memory (ROM) 602 or a program loaded into a random access memory (RAM) 603 from a storage portion 606. The RAM 603 also stores various programs and data required by operations of the system 600. The CPU 601, the ROM 602 and the RAM 603 are connected to each other through a bus 604. An input/output (I/O) interface 605 is also connected to the bus 604.

The following components are connected to the I/O interface 605: a storage portion 606 including a hard disk and the like; and a communication portion 607 including a network interface card, such as a LAN card and a modem. The communication portion 607 performs communication processes via a network, such as the Internet. A driver 608 is also connected to the I/O interface 605 as required. A removable medium 609, such as a magnetic disk, an optical disk, a magneto-optical disk, and a semiconductor memory, may be installed on the driver 608, to facilitate the retrieval of a computer program from the removable medium 609, and the installation thereof on the storage portion 606 as needed.

In particular, according to the embodiments of the present disclosure, the process described above with reference to the flow chart may be implemented in a computer software program. For example, an embodiment of the present disclosure includes a computer program product, which includes a computer program that is tangibly embedded in a computer-readable medium. The computer program includes program codes for performing the method as illustrated in the flow chart. In such an embodiment, the computer program may be downloaded and installed from a network via the communication portion 607, and/or may be installed from the removable medium 609. The computer program, when executed by the central processing unit (CPU) 601, implements the above mentioned functionalities as defined by the method of the present disclosure.

It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above.

In the present disclosure, the computer readable storage medium may be any physical medium containing or storing programs which may be used by a command execution system, apparatus or element or incorporated thereto. In the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

A computer program code for performing operations in the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the accompanying drawings. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system performing specified functions or operations, or by a combination of a dedicated hardware and computer instructions.

The units involved in the embodiments of the present disclosure may be implemented by means of software or hardware. The described units may also be provided in a processor, for example, may be described as: a processor including a distance determining unit, a face image acquisition unit, a user information determining unit and an unlocking instruction sending unit. Here, the names of these units do not in some cases constitute limitations to such units themselves. For example, the distance determining unit may also be described as "a unit configured to determine a distance between a user and the vehicle".

In another aspect, the present disclosure further provides a computer readable medium. The computer readable medium may be included in the apparatus in the above described embodiments, or a stand-alone computer readable medium not assembled into the apparatus. The computer readable medium stores one or more programs. The one or more programs, when executed by the apparatus, cause the apparatus to: determine a distance between a user and the vehicle; acquire a face image of the user in response to determining that the distance is smaller than or equal to a preset threshold; determine user information of the user based on the face image; and send an unlocking instruction to the vehicle, in response to determining that the user information satisfies a preset condition.

## Claims

1. A method for controlling a vehicle, the method comprising:
determining (201) a distance between a user and the vehicle;
acquiring (202) a face image of the user in response to determining that the distance is smaller than or equal to a preset threshold;
determining (203) user information of the user based on the face image; and
sending (204) an unlocking instruction to the vehicle, in response to determining that the user information satisfies a preset condition, wherein the user information comprises a credit value, wherein the credit value is obtained by analysis of income, expenditure and historical behaviour data on shopping websites of the user by a bank or other third-party institutions; and
the sending an unlocking instruction to the vehicle, in response to determining that the user information satisfies a preset condition, comprises:
sending the unlocking instruction to the vehicle, in response to determining that the credit value is greater than a preset credit value threshold.

2. The method according to claim 1, wherein the sending an unlocking instruction to the vehicle, in response to determining that the user information satisfies a preset condition, comprises:
sending prompt information for unlocking the vehicle in response to determining that the user information satisfies the preset condition; and
sending the unlocking instruction to the vehicle, in response to determining that response operation information for the prompt information is received.

3. The method according to any one of preceding claims, wherein the method further comprises:
recording (401) an unlocking time, in response to determining that the vehicle is unlocked;
recording (402) a locking time, in response to determining that the vehicle is locked; and
generating (403) a vehicle usage fee value based on the unlocking time and the locking time.

4. The method according to any one of preceding claims, wherein the determining user information of the user based on the face image, comprises:
extracting feature information of the face image;
matching the extracted feature information with feature information in a preset feature information set, wherein the feature information in the feature information set is in one-to-one correspondence with user information in a preset user information set; and
determining user information corresponding to feature information matching the extracted feature information as the determined user information.

5. The method according to claim 4, wherein the user information in the user information set is obtained by:
receiving an image for registration of the user;
extracting, in response to determining that the image for registration comprises a face image, feature information of the face image in the image for registration and receiving registration information of the user; and
using the registration information as user information corresponding to the feature information of the face image in the image for registration.

6. The method according to claim 5, wherein the method further comprises:
outputting prompt information in response to determining that the image for registration does not comprise a face image.

7. An apparatus for controlling a vehicle, the apparatus comprising:
a distance determining unit (501), configured to determine a distance between a user and the vehicle;
a face image acquisition unit (502), configured to acquire a face image of the user in response to determining that the distance is smaller than or equal to a preset threshold;
a user information determining unit (503), configured to determine user information of the user based on the face image; and
an unlocking instruction sending unit (504), configured to send an unlocking instruction to the vehicle, in response to determining that the user information satisfies a preset condition,
wherein the user information comprises a credit value, wherein the credit value is obtained by analysis of income, expenditure and historical behaviour data on shopping websites of the user by a bank or other third-party institutions; and
the unlocking instruction sending unit is further configured to:
send the unlocking instruction to the vehicle, in response to determining that the credit value is greater than a preset credit value threshold.

8. The apparatus according to claim 7, wherein the unlocking instruction sending unit is further configured to:
send prompt information for unlocking the vehicle in response to determining that the user information satisfies the preset condition; and
send the unlocking instruction to the vehicle, in response to determining that response operation information for the prompt information is received.

9. The apparatus according to claim 7 or 8, wherein the apparatus further comprises:
an unlocking time recording unit, configured to record an unlocking time, in response to determining that the vehicle is unlocked;
a locking time recording unit, configured to record a locking time, in response to determining that the vehicle is locked; and
a value generation unit, configured to generate a vehicle usage fee value based on the unlocking time and the locking time.

10. The apparatus according to any one of claims 7 to 9, wherein the user information determining unit comprises:
a feature information extraction module, configured to extract feature information of the face image;
a feature information matching module, configured to match the extracted feature information with feature information in a preset feature information set, wherein the feature information in the feature information set is in one-to-one correspondence with user information in a preset user information set; and
a user information determining module, configured to determine user information corresponding to feature information matching the extracted feature information as the determined user information.

11. The apparatus according to claim 10, wherein the apparatus further comprises a user information generation unit configured to generate the user information in the user information set, the user information generation unit is configured to:
receive an image for registration of the user;
extract, in response to determining that the image for registration comprises a face image, feature information of the face image in the image for registration and receive registration information of the user; and
use the registration information as user information corresponding to the feature information of the face image in the image for registration.

12. The apparatus according to claim 11, wherein the user information generation unit is further configured to: output prompt information in response to determining that the image for registration does not comprise a face image.

13. A computer readable medium, storing a computer program thereon, the program, when executed by the apparatus of claim 7, implements the method according to any one of claims 1-6.

## Patentansprüche

1. Verfahren zum Steuern eines Fahrzeugs, wobei das Verfahren Folgendes umfasst:
Bestimmen (201) eines Abstands zwischen einem Benutzer und dem Fahrzeug;
Erfassen (202) eines Gesichtsbildes des Benutzers in Reaktion auf das Bestimmen, dass der Abstand kleiner als oder gleich einem voreingestellten Schwellwert ist;
Bestimmen (203) von Benutzerinformationen des Benutzers auf Basis des Gesichtsbildes und
Senden (204) einer Entriegelungsanweisung an das Fahrzeug in Reaktion auf das Bestimmen, dass die Benutzerinformationen eine voreingestellte Bedingung erfüllen, wobei die Benutzerinformationen einen Kreditwert umfassen, wobei der Kreditwert mittels Analyse von Einkommen, Ausgaben und historischen Verhaltensdaten auf Einkaufswebsites des Benutzers durch eine Bank oder andere dritte Institutionen erhalten wird; und
wobei das Senden einer Entriegelungsanweisung an das Fahrzeug in Reaktion auf das Bestimmen, dass die Benutzerinformationen eine voreingestellte Bedingung erfüllen, Folgendes umfasst:
Senden der Entriegelungsanweisung an das Fahrzeug in Reaktion auf das Bestimmen, dass der Kreditwert größer ist als ein voreingestellter Kreditwertschwellwert.

2. Verfahren nach Anspruch 1, wobei das Senden einer Entriegelungsanweisung an das Fahrzeug in Reaktion auf das Bestimmen, dass die Benutzerinformationen eine voreingestellte Bedingung erfüllen, Folgendes umfasst:
Senden von Eingabeaufforderungsinformationen zum Entriegeln des Fahrzeugs in Reaktion auf das Bestimmen, dass die Benutzerinformationen die voreingestellte Bedingung erfüllen; und
Senden der Entriegelungsanweisung an das Fahrzeug in Reaktion auf das Bestimmen, dass Antwortbedienungsinformationen für die Eingabeaufforderungsinformationen empfangen wurden.

3. Verfahren nach einem der vorhergehenden Ansprüche, wobei das Verfahren ferner Folgendes umfasst:
Aufzeichnen (401) einer Entriegelungszeit in Reaktion auf das Bestimmen, dass das Fahrzeug entriegelt wird;
Aufzeichnen (402) einer Verriegelungszeit in Reaktion auf das Bestimmen, dass das Fahrzeug verriegelt wird; und
Erzeugen (403) eines Fahrzeugnutzungsgebührenwertes auf Basis der Entriegelungszeit und der Verriegelungszeit.

4. Verfahren nach einem der vorhergehenden Ansprüche, wobei das Bestimmen von Benutzerinformationen des Benutzers auf Basis des Gesichtsbildes Folgendes umfasst:
Extrahieren von Merkmalsinformationen des Gesichtsbildes;
Abgleichen der extrahierten Merkmalsinformationen mit Merkmalsinformationen in einem voreingestellten Merkmalsinformationssatz, wobei die Merkmalsinformationen im Merkmalsinformationssatz eine Eins-zu-eins-Entsprechung mit Benutzerinformationen in einem voreingestellten Benutzerinformationssatz aufweisen; und
Bestimmen von Benutzerinformationen, die Merkmalsinformationen entsprechen, die mit den extrahierten Merkmalsinformationen übereinstimmen, als die bestimmten Benutzerinformationen.

5. Verfahren nach Anspruch 4, wobei die Benutzerinformationen im Benutzerinformationssatz durch Folgendes erhalten werden:
Empfangen eines Bildes für die Registrierung des Benutzers;
in Reaktion auf das Bestimmen, dass das Bild für die Registrierung ein Gesichtsbild umfasst, Extrahieren von Merkmalsinformationen des Gesichtsbildes im Bild für die Registrierung und Empfangen von Registrierungsinformationen des Benutzers und
Verwenden der Registrierungsinformationen als Benutzerinformationen, die den Merkmalsinformationen des Gesichtsbildes im Bild für die Registrierung entsprechen.

6. Verfahren nach Anspruch 5, wobei das Verfahren ferner Folgendes umfasst:
Ausgeben von Eingabeaufforderungsinformationen in Reaktion auf das Bestimmen, dass das Bild für die Registrierung kein Gesichtsbild umfasst.

7. Vorrichtung zum Steuern eines Fahrzeugs wobei die Vorrichtung Folgendes umfasst:
eine Abstandsbestimmungseinheit (501), die dazu ausgelegt ist, einen Abstand zwischen einem Benutzer und dem Fahrzeug zu bestimmen;
eine Gesichtsbilderfassungseinheit (502), die dazu ausgelegt ist, in Reaktion auf das Bestimmen, dass der Abstand kleiner als oder gleich einem voreingestellten Schwellwert ist, ein Gesichtsbild des Benutzers zu erfassen;
eine Benutzerinformationsbestimmungseinheit (503), die dazu ausgelegt ist, Benutzerinformationen des Benutzers auf Basis des Gesichtsbildes zu bestimmen; und
eine Entriegelungsanweisungssendeeinheit (504), die dazu ausgelegt ist, in Reaktion auf das Bestimmen, dass die Benutzerinformationen eine voreingestellte Bedingung erfüllen, eine Entriegelungsanweisung an das Fahrzeug zu senden,
wobei die Benutzerinformationen einen Kreditwert umfassen, wobei der Kreditwert mittels Analyse von Einkommen, Ausgaben und historischen Verhaltensdaten auf Einkaufswebsites des Benutzers durch eine Bank oder andere dritte Institutionen erhalten wird; und
wobei die Entriegelungsanweisungssendeeinheit ferner zu Folgendem ausgelegt ist:
Senden der Entriegelungsanweisung an das Fahrzeug in Reaktion auf das Bestimmen, dass der Kreditwert größer ist als ein voreingestellter Kreditwertschwellwert.

8. Vorrichtung nach Anspruch 7, wobei die Entriegelungsanweisungssendeeinheit ferner zu Folgendem ausgelegt ist:
Senden von Eingabeaufforderungsinformationen zum Entriegeln des Fahrzeugs in Reaktion auf das Bestimmen, dass die Benutzerinformationen die voreingestellte Bedingung erfüllen; und
Senden der Entriegelungsanweisung an das Fahrzeug in Reaktion auf das Bestimmen, dass Antwortbedienungsinformationen für die Eingabeaufforderungsinformationen empfangen wurden.

9. Vorrichtung nach Anspruch 7 oder 8, wobei die Vorrichtung ferner Folgendes umfasst:
eine Entriegelungszeitaufzeichnungseinheit, die dazu ausgelegt ist, in Reaktion auf das Bestimmen, dass das Fahrzeug entriegelt wird, eine Entriegelungszeit aufzuzeichnen;
eine Verriegelungszeitaufzeichnungseinheit, die dazu ausgelegt ist, in Reaktion auf das Bestimmen, dass das Fahrzeug verriegelt wird, eine Verriegelungszeit aufzuzeichnen; und
eine Werterzeugungseinheit, die dazu ausgelegt ist, auf Basis der Entriegelungszeit und der Verriegelungszeit einen Fahrzeugnutzungsgebührenwert zu erzeugen.

10. Vorrichtung nach einem der Ansprüche 7 bis 9, wobei die Benutzerinformationsbestimmungseinheit Folgendes umfasst:
ein Merkmalsinformationsextraktionsmodul, das dazu ausgelegt ist, Merkmalsinformationen des Gesichtsbildes zu extrahieren;
ein Merkmalsinformationsabgleichmodul, das dazu ausgelegt ist, die extrahierten Merkmalsinformationen mit Merkmalsinformationen in einem voreingestellten Merkmalsinformationssatz abzugleichen, wobei die Merkmalsinformationen im Merkmalsinformationssatz eine Eins-zu-eins-Entsprechung mit Benutzerinformationen in einem voreingestellten Benutzerinformationssatz aufweisen; und
ein Benutzerinformationsbestimmungsmodul, das dazu ausgelegt ist, Benutzerinformationen, die Merkmalsinformationen entsprechen, die mit den extrahierten Merkmalsinformationen übereinstimmen, als die bestimmten Benutzerinformationen zu bestimmen.

11. Vorrichtung nach Anspruch 10, wobei die Vorrichtung ferner eine Benutzerinformationserzeugungseinheit umfasst, die dazu ausgelegt ist, die Benutzerinformationen im Benutzerinformationssatz zu erzeugen, die Benutzerinformationserzeugungseinheit zu Folgendem ausgelegt ist:
Empfangen eines Bildes für die Registrierung des Benutzers;
in Reaktion auf das Bestimmen, dass das Bild für die Registrierung ein Gesichtsbild umfasst, Extrahieren von Merkmalsinformationen des Gesichtsbildes im Bild für die Registrierung und Empfangen von Registrierungsinformationen des Benutzers und Verwenden der Registrierungsinformationen als Benutzerinformationen, die den Merkmalsinformationen des Gesichtsbildes im Bild für die Registrierung entsprechen.

12. Vorrichtung nach Anspruch 11, wobei die Benutzerinformationserzeugungseinheit ferner zu Folgendem ausgelegt ist:
Ausgeben von Eingabeaufforderungsinformationen in Reaktion auf das Bestimmen, dass das Bild für die Registrierung kein Gesichtsbild umfasst.

13. Computerlesbares Medium, auf dem ein Computerprogramm gespeichert ist, wobei das Programm, wenn es von der Vorrichtung von Anspruch 7 ausgeführt wird, das Verfahren nach einem der Ansprüche 1-6 implementiert.

## Revendications

1. Procédé pour commander un véhicule, le procédé comprenant :
la détermination (201) d'une distance entre un utilisateur et le véhicule ;
l'acquisition (202) d'une image de visage de l'utilisateur en réponse à la détermination que la distance est inférieure ou égale à un seuil prédéfini ;
la détermination (203) d'informations d'utilisateur, de l'utilisateur, sur la base de l'image de visage ; et
l'envoi (204) d'une instruction de déverrouillage au véhicule, en réponse à la détermination que les informations d'utilisateur satisfont à une condition prédéfinie, dans lequel les informations d'utilisateur comprennent une valeur de crédit, dans lequel la valeur de crédit est obtenue par analyse de données de revenus,
de dépenses et de comportement historique sur des sites Web de commerce, de l'utilisateur, par une banque ou d'autres institutions tierces ; et
l'envoi d'une instruction de déverrouillage au véhicule, en réponse à la détermination que les informations d'utilisateur satisfont à une condition prédéfinie, comprenant :
l'envoi de l'instruction de déverrouillage au véhicule, en réponse à la détermination que la valeur de crédit est supérieure à un seuil prédéfini de valeur de crédit.

2. Procédé selon la revendication 1, dans lequel l'envoi d'une instruction de déverrouillage au véhicule, en réponse à la détermination que les informations d'utilisateur satisfont à une condition prédéfinie, comprend :
l'envoi d'informations d'invite pour déverrouiller le véhicule, en réponse à la détermination que les informations d'utilisateur satisfont à la condition prédéfinie ; et
l'envoi de l'instruction de déverrouillage au véhicule, en réponse à la détermination que des informations d'opération de réponse pour les informations d'invite sont reçues.

3. Procédé selon l'une quelconque des revendications précédentes, dans lequel le procédé comprend en outre :
l'enregistrement (401) d'une heure de déverrouillage, en réponse à la détermination que le véhicule est déverrouillé ;
l'enregistrement (402) d'une heure de verrouillage, en réponse à la détermination que le véhicule est verrouillé ; et
la génération (403) d'une valeur de tarif d'utilisation de véhicule, sur la base de l'heure de déverrouillage et de l'heure de verrouillage.

4. Procédé selon l'une quelconque des revendications précédentes, dans lequel la détermination d'informations d'utilisateur, de l'utilisateur, sur la base de l'image de visage, comprend :
l'extraction d'informations de caractéristique de l'image de visage ;
l'assortiment des informations de caractéristique extraites à des informations de caractéristique dans un ensemble prédéfini d'informations de caractéristique, dans lequel les informations de caractéristique dans l'ensemble d'informations de caractéristique sont en correspondance une-à-une avec des informations d'utilisateur dans un ensemble prédéfini d'informations d'utilisateur ; et
la détermination d'informations d'utilisateur, correspondant à des informations de caractéristique assorties aux informations de caractéristique extraites, en tant qu'informations d'utilisateur déterminées.

5. Procédé selon la revendication 4, dans lequel les informations d'utilisateur dans l'ensemble d'informations d'utilisateur sont obtenues par l'intermédiaire de :
la réception d'une image pour l'inscription de l'utilisateur ;
l'extraction, en réponse à la détermination que l'image pour l'inscription comprend une image de visage, d'informations de caractéristique de l'image de visage dans l'image pour l'inscription, et la réception d'informations d'inscription de l'utilisateur ; et
l'utilisation des informations d'inscription en tant qu'informations d'utilisateur, correspondant aux informations de caractéristique de l'image de visage dans l'image, pour l'inscription.

6. Procédé selon la revendication 5, dans lequel le procédé comprend en outre :
la sortie d'informations d'invite en réponse à la détermination que l'image pour l'inscription ne comprennent pas d'image de visage.

7. Appareil pour commander un véhicule, l'appareil comprenant :
une unité de détermination de distance (501), configurée pour déterminer une distance entre un utilisateur et le véhicule ;
une unité d'acquisition d'image de visage (502), configurée pour acquérir une image de visage de l'utilisateur en réponse à la détermination que la distance est inférieure ou égale à un seuil prédéfini ;
une unité de détermination d'informations d'utilisateur (503), configurée pour déterminer des informations d'utilisateur, de l'utilisateur, sur la base de l'image de visage ; et
une unité d'envoi d'instruction de déverrouillage (504), configurée pour envoyer une instruction de déverrouillage au véhicule, en réponse à la détermination que les informations d'utilisateur satisfont à une condition prédéfinie,
dans lequel les informations d'utilisateur comprennent une valeur de crédit, dans lequel la valeur de crédit est obtenue par analyse de données de revenus, de dépenses et de comportement historique sur des sites Web de commerce, de l'utilisateur, par une banque ou d'autres institutions tierces ; et
l'unité d'envoi d'instruction de déverrouillage étant en outre configurée pour :
envoyer l'instruction de déverrouillage au véhicule, en réponse à la détermination que la valeur de crédit est supérieure à un seuil prédéfini de valeur de crédit.

8. Appareil selon la revendication 7, dans lequel l'unité d'envoi d'instruction de déverrouillage est en outre configurée pour :
envoyer des informations d'invite pour déverrouiller le véhicule en réponse à la détermination que les informations d'utilisateur satisfont à la condition prédéfinie ; et
envoyer l'instruction de déverrouillage au véhicule, en réponse à la détermination que des informations d'opération de réponse pour les informations d'invite sont reçues.

9. Appareil selon la revendication 7 ou 8, dans lequel l'appareil comprend en outre :
une unité d'enregistrement d'heure de déverrouillage, configurée pour enregistrer une heure de déverrouillage, en réponse à la détermination que le véhicule est déverrouillé ;
une unité d'enregistrement d'heure de verrouillage, configurée pour enregistrer une heure de verrouillage, en réponse à la détermination que le véhicule est verrouillé ; et
une unité de génération de valeur, configurée pour générer une valeur de tarif d'utilisation de véhicule, sur la base de l'heure de déverrouillage et l'heure de verrouillage.

10. Appareil selon l'une quelconque des revendications 7 à 9, dans lequel l'unité de détermination d'informations d'utilisateur comprend :
un module d'extraction d'informations de caractéristique, configuré pour extraire des informations de caractéristique de l'image de visage ;
un module d'assortiment d'informations de caractéristique, configuré pour assortir les informations de caractéristique extraites à des informations de caractéristique dans un ensemble prédéfini d'informations de caractéristique, dans lequel les informations de caractéristique dans l'ensemble d'informations de caractéristique sont en correspondance une-à-une avec des informations d'utilisateur dans un ensemble prédéfini d'informations d'utilisateur ; et
un module de détermination d'informations d'utilisateur, configuré pour déterminer des informations d'utilisateur, correspondant à des informations de caractéristique assorties aux informations de caractéristique extraites, en tant qu'informations d'utilisateur déterminées.

11. Appareil selon la revendication 10, dans lequel l'appareil comprend en outre une unité de génération d'informations d'utilisateur configurée pour générer les informations d'utilisateur dans l'ensemble d'informations d'utilisateur, l'unité de génération d'informations d'utilisateur est configurée pour :
recevoir une image pour l'inscription de l'utilisateur ;
extraire, en réponse à la détermination que l'image pour l'inscription comprend une image de visage, des informations de caractéristique de l'image de visage dans l'image pour l'inscription et recevoir des informations d'inscription de l'utilisateur ; et
utiliser les informations d'inscription en tant qu'informations d'utilisateur, correspondant aux informations de caractéristique de l'image de visage dans l'image, pour l'inscription.

12. Appareil selon la revendication 11, dans lequel l'unité de génération d'informations d'utilisateur est en outre configurée pour :
sortir des informations d'invite en réponse à la détermination que l'image pour l'inscription ne comprennent pas d'image de visage.

13. Support lisible par ordinateur, stockant un programme d'ordinateur sur celui-ci, le programme, lorsqu'il est exécuté par l'appareil selon la revendication 7, mettant en œuvre le procédé selon l'une quelconque des revendications 1 à 6.
